# EUROPEAN PATENT APPLICATION

(11) **EP 4 792 930 A1**
(43) Date of publication of application: **19.08.2026**
(21) Application number: 26159028.5
(22) Date of filing: 17.02.2026
(51) Int. Cl.: B01J 20/20, B01J 20/28, C01B 3/00

(54) **NANOPOROUS COMPOSITION WITH NANOPOROUS COMPONENTS HAVING DIFFERENT PORE CHARACTERISTICS, AND FLUID STORAGE DEVICE**

(30) Priority: 18.02.2025 AT 501112025
(71) Applicant: Montanuniversität Leoben, 8700 Leoben (AT)
(72) Inventor: Zeiler, Stefan, 8700 Leoben (AT); Kostoglou, Nikolaos, 73133 Chania (GR); Maier-Kiener, Verena, 8700 Leoben (AT); Mitterer, Christian, 8700 Leoben (AT); Obenaus-Emler, Robert, 8713 St. Stefan ob Leoben (AT)
(74) Representative: Dilg, Haeusler, Schindelmann Patentanwaltsgesellschaft mbH

(57) **Abstract**

There is described a nanoporous composition, comprising:
i) a first nanoporous component with a first pore characteristic; and
ii) a second nanoporous component with a second pore characteristic;
a) wherein the first nanoporous component and the second nanoporous component are mixed in the nanoporous composition; and
b) wherein the first pore characteristic is different from the second pore characteristic, in particular thereby providing an adjusted hierarchical pore structure.

## Description

### Field of the Invention

The invention relates to a nanoporous composition, comprising a first nanoporous component with a first pore characteristic and a second nanoporous component with a second pore characteristic, wherein the first nanoporous component and the second nanoporous component are mixed in the nanoporous composition, and wherein the first pore characteristic is different from the second pore characteristic, thereby providing a hierarchical pore structure. The invention further relates to a fluid storage device that comprises the nanoporous composition and to a use of the nanoporous composition. Further, the invention relates to a method of manufacturing a nanoporous composition.

### Technical Background

Nanoporous materials are a class of substances characterized by a highly porous structure with pores on the nanometer scale, typically ranging from sub-nanometer regime to 100 nanometers. These materials can exhibit an exceptional surface area, high porosity, and tunable pore size and shape, which make them highly versatile for a variety of applications.

The unique properties of nanoporous materials arise from their pore characteristics and the resulting interactions between their structure and external molecules. Their applications span a wide range of fields, including catalysis, adsorption, separation processes, energy storage, conversion, sensing, and drug delivery. Examples of nanoporous materials can include e.g. carbons, zeolites, metal organic frameworks and silicas.

Due to their high specific surface area and pore volume, nanoporous materials can represent excellent candidates for fluid storage applications. For example, at cryogenic temperatures, van-der-Waals interactions enable significant amounts of hydrogen to be adsorbed and reversibly released on/from the surface of these nanoporous materials. Typically, smaller pore sizes lead to increased uptake at pressures below 1 bar, while larger surface areas and pore volumes contribute to significant hydrogen storage capacities in the pressure range between 1 and 50 bar.

Nanoporous materials can thus potentially play an important role in addressing energy and environmental challenges, particularly in the storage and utilization of hydrogen - a clean and sustainable energy carrier. The ability of hydrogen to produce energy without greenhouse gas emissions makes it an ideal candidate for mitigating climate change and reducing dependence on fossil fuels.

In contrast, conventional hydrogen storage devices are rather expensive highpressure hydrogen vessels or liquid hydrogen tanks. In particular, since hydrogen has the lowest density of all gases and thus requires a lot of space.

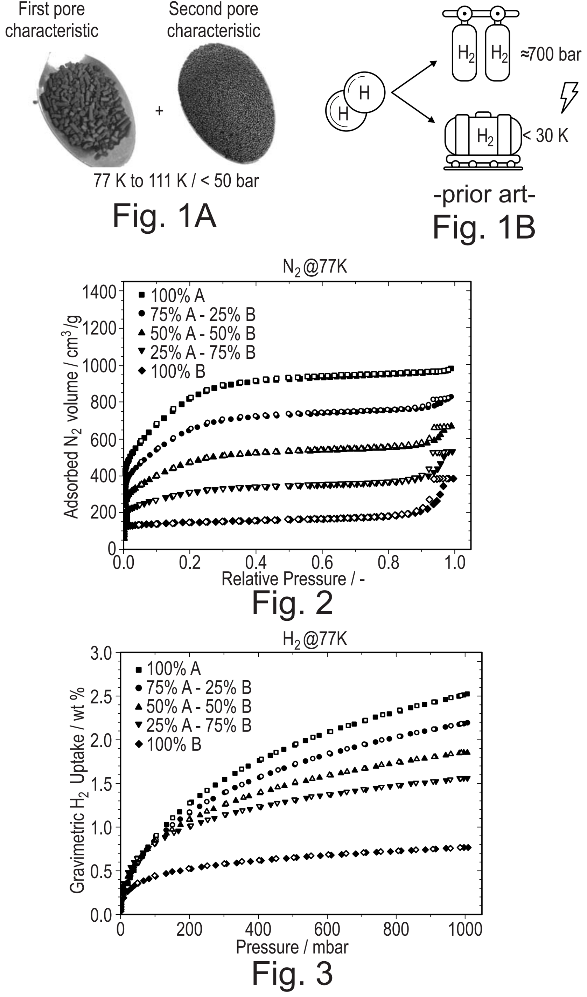

Figure 1B schematically shows that, conventionally, hydrogen is stored in hydrogen bottles and hydrogen tanks/containers. The drawback of such conventional hydrogen storage devices can be seen is their high energy demand for storing the hydrogen. In the shown example, high pressures up to 700 bar are necessary to accomplish a sufficient volumetric energy density for high pressure vessels for gaseous hydrogen or temperatures around 20 K for liquid hydrogen tanks.

Presently, nanoporous materials such as activated carbons are made from a variety of precursors and have been well investigated regarding their hydrogen uptake behavior at cryogenic and room temperatures. For further reference, see for example: Zhang et al., Fundamentals of hydrogen storage in nanoporous materials, Prog. Energy 4 (2022).

However, so far efforts have mostly been taken to investigate single lab-synthesized materials which are not available in large quantities, requiring complex and expensive synthesis methods, and are therefore not suitable for potential large-scale applications. Further, manufacturing a single nanoporous material with specific (storage/pore) properties can be seen as a challenging and expensive task.

### Summary of the Invention

There may be a need to provide an efficient nanoporous material, in particular regarding fluid storage.

A nanoporous composition, a fluid storage device, a use of the nanoporous composition, and a method are described in the following.

According to an aspect of the invention, there is described a nanoporous composition (comprising or consisting of at least two nanoporous material components), comprising:
i) a first nanoporous component (a first nanoporous material) with a first pore characteristic (for example a first pore size range); and
ii) a second nanoporous component (a second nanoporous material) with a second pore characteristic (for example a second pore size range).

The first nanoporous component and the second nanoporous component are hereby mixed in the nanoporous composition (for example mechanically by stirring and/or arranged layer-wise). Further, the first pore characteristic is different from the second pore characteristic (for example different pore size ranges). In particular, a hierarchical pore structure is thereby provided (by the different pore characteristics).

According to an aspect of the invention, there is described a fluid storage device/medium that comprises the above-described nanoporous composition. For example, the fluid storage device can comprise a plurality of compartments, each comprising the above-described nanoporous composition. The compartments may be cooled/heated by a cooling/heating system. Further, the fluid to be stored may be streamed (through respective fluid lines) into the compartments.

According to an aspect of the invention, there is described a use (method of using) a nanoporous composition as described above for at least one of fluid (e.g. CO₂) capture, fluid storage, purification (e.g. water purification), treatment (e.g. water treatment), (selective gas) separation.

According to an aspect of the invention, there is described a method of manufacturing a nanoporous composition, the method comprising:
i) adjusting (tailoring/engineering) a mixture of at least a first nanoporous component and a second nanoporous component to thereby provide specific hierarchical pore structure properties (in the nanoporous composition); and
ii) mixing the first nanoporous component with a first pore characteristic and

the second nanoporous component with a second pore characteristic,
wherein the first pore characteristic is different from the second pore characteristic, thereby providing the nanoporous composition with the hierarchical pore structure properties.

According to an aspect of the invention, there is described a method of storing a fluid in a nanoporous composition (as described above), the method comprising: providing the fluid to the pores of the nanoporous composition.

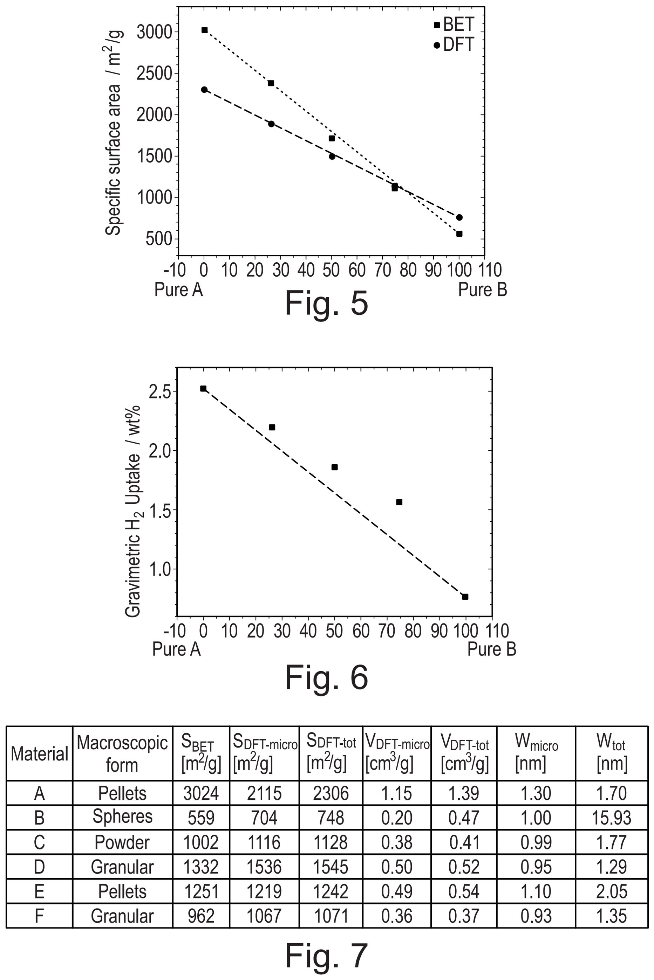

In the present document, the term "nanoporous component" may in particular refer to a single nanoporous material. Generally, such single nanoporous materials are optimized for specific applications, e.g. fluid storage. A nanoporous material may be seen as a substance characterized by a highly porous structure with pore sizes on the nanometer scale (typically 0.3-100 nm). These materials have exceptionally high surface areas, large pore volumes and tunable pore characteristics, enabling them to adsorb, store, or catalyze interactions with molecules. Examples of commercially available nanoporous components and their properties are provided in Figure 7.

In an embodiment, the pores of nanoporous materials may be characterized as follows (this pore size classification is based on the 2015 IUPAC guidelines, see: Thommes, M., Kaneko, K., Neimark, A. V., Olivier, J. P., Rodriguez-Reinoso, F., Rouquerol, J., & Sing, K. S. (2015). Physisorption of gases, with special reference to the evaluation of surface area and pore size distribution (IUPAC Technical Report). Pure and applied chemistry, 87(9-10), 1051-1069):
- Micropores: size: < 2 nanometers (eventually larger than 0.3 nm), extremely small pores, often at the molecular or atomic scale, provide high surface area for adsorption, typically dominate in materials like zeolites or activated carbons, enhance storage capacity (e.g., gas adsorption), may contribute to selectivity in separation processes.
- Mesopores: size 2-50 nanometers, intermediate-sized pores, facilitate diffusion of molecules and improve accessibility to active sites, commonly found in mesoporous silica or polymeric materials, may serve as transport pathways for reactants and products, bridge the gap between micropores and macropores.
- Macropores, size: > 50 nanometers, large pores, visible under electron microscopes, act as channels for bulk flow of gases or liquids, may enhance material permeability and reduce resistance to flow, may provide structural integrity and support for the finer pore networks.

**In** the present document, the term "nanoporous composition" may in particular refer to a material composition that comprises or consists of two or more nanoporous components as described above. The two or more nanoporous components may hereby be present as a mixture, e.g. mixed powders, granules, grains, particles, or pellets. The mixing in the nanoporous composition may be homogenous (e.g. by mechanically stirring) or inhomogeneous (e.g. arranged layer-wise, in particular using a separator layer). In a basic example, the nanoporous composition comprises mixed powders of two nanoporous materials with different pore characteristics. In a more sophisticated example, the nanoporous composition may comprise a plurality of nanoporous materials, each with different pore characteristics and some material portions (at least partially) separated by membranes.

In the present document, the term "pore characteristic" may in particular refer to one or more specific property/properties of the pores of a nanoporous component. For example, the pore characteristic may refer to the pore size, in particular pore size distribution, of a nanoporous material. Thus, different nanoporous materials may have different pore size distributions (e.g. one in the micropore range and the other in the mesopore range). In a further example, the pore characteristic may also refer to a pore volume, an average pore diameter/width or a surface area (considering all nanopores (0.3 - 100 nm) or specific pore classes like described above (e.g. micropores)). In another example, the pore characteristic may refer to a shape of the pores, a permeability, or a surface pattern of the pores.

In the present document, the term "hierarchical pore structure" may in particular refer to a pore structure (of a nanoporous composition) that integrates two or more (multiple) pore size scales, for example regarding micropores (< 2 nm), mesopores (2-50 nm), and macropores (> 50 nm). The pores of such a nanoporous composition may thus be multi-scale organized. In an embodiment, a multi-scale arrangement may e.g. combine the benefits of pore size, such as high surface area from micropores, efficient molecular transport from mesopores, and bulk flow facilitation from macropores. While in one example, pore size distributions (of different nanoporous materials) may overlap, in another example, the pore sizes may not overlap.

In the present document, the term "adjusting" (or tailoring) may in particular refer to a step of tuning/engineering the composition of the nanoporous composition, in particular by adjusting the mixture/ratio of the two or more nanoporous components. Depending on the ratio of the nanoporous components (compare Figures 2 to 6), different properties of the nanoporous composition may be achieved. For example, specific hierarchical pore structure properties can be provided by mixing the nanoporous components in a specific ratio. In a further example, adjusting may also comprise packing the nanoporous materials in a dense manner. For example, fine particles may fill free spaces between large particles. In a further example, adjusting may also comprise economic aspects, for example adjusting may be done so that less expensive material is applied in the nanoporous composition (preferably with the same advantageous properties).

According to an exemplary embodiment, the invention may be based on the idea that an efficient nanoporous material, specifically for storing fluids such as hydrogen, can be provided, when a nanoporous composition is used that comprises at least two mixed nanoporous material components with different pore characteristics, for example two different pore size ranges.

Conventionally, nanoporous materials are optimized single materials. Many different nanoporous materials are commercially available (compare Figure 7) and have a wide range of different properties. Hereby, nanoporous materials that have a high surface area and are activated (e.g. material A with 3024 m²/g) are generally more expensive than nanoporous materials with a low surface area that are not activated (e.g. material B with 559 m²/g). In order to provide an optimized storage effect, one would thus have to use an expensive nanoporous material, thereby increasing overall costs of the material.

In contrast, the proposed approach may involve mixing readily available nanoporous materials with distinct pore structures. Optimizing the proportions of each nanoporous material may allow for a tailored hierarchical pore structure, resulting e.g. in increased hydrogen uptake, while reducing the costs of the mixture. Additionally, using nanoporous materials with varying properties, e.g. particle sizes, may further increase the packing density, thus enabling a more space-efficient system.

The present invention may be focused on enhancing capabilities of nanoporous materials (e.g. hydrogen storage) by creating tailor-engineered hierarchical pore structures through mixing of two or more nanoporous materials. By combining readily (commercially) available nanoporous materials with varying pore characteristics (such as sizes), efficiency may be maximized. In particular, the hierarchical pore structure of the nanoporous composition may be specifically adjusted to desired properties by mixing specific amounts and kinds of nanoporous materials. Preferably, the packing density of the nanoporous composition is also optimized in this process.

It has been surprisingly found by the inventors that the properties (in particular fluid uptake) of a nanoporous composition do not only correspond to the sum of the properties of the single nanocarbon materials, as one would expect. For example, when merely mixing a first nanoporous component with a first hydrogen uptake property and a second nanoporous component with a second hydrogen uptake property, one would expect that the hydrogen uptake property of the nanoporous composition would be the calculated weighted sum of the first hydrogen uptake property and the second hydrogen uptake property. However, the inventors have experimentally determined (compare Figure 6) that the actual hydrogen uptake property of the nanoporous composition can be significantly (e.g. up to 29%) higher than the expected/calculated weighted sum of the first hydrogen uptake property and the second hydrogen uptake property.

This surprising finding may enable a large variety of adjusted/tailored nanoporous material compositions that can be mixed in ratios (and with mixing methods) optimized for the desired application.

The described approach may not only improve storage performance (at both, low and high pressures) but may also reduce production costs, making it more viable for large-scale applications. Further, at least one the following advantages may be provided:
- Enhanced fluid/hydrogen uptake: the tailored hierarchical pore structures result in a significantly higher storage capacity compared to the expected/calculated weighted sum of the first hydrogen uptake property and the second hydrogen uptake property.
- Cost-effectiveness: utilizing readily available nanoporous materials and optimizing their mixture reduces production costs, making the solution more economically feasible.
- Increased packing density: the combination of different particle sizes may enhance the packing density, enabling more efficient use of space in storage systems.
- Sustainability: by improving the efficiency of fluid storage, this method may support the development of sustainable energy storage solutions crucial for the transition to renewable energy.

### Exemplary Embodiments

In an embodiment, the (first and/or second) pore characteristic comprises at least one of a pore size, a pore size distribution (range), a pore volume, a pore volume distribution, an average pore diameter/width, a surface area, a pore arithmetic mean diameter/width, a pore shape, a pore connectivity (tortuosity), a permeability, a surface chemistry/polar surface, a porosity, a bulk/skeletal density, a tortuosity. In other words, the pore characteristic may comprise one or more well-established pore properties of a nanoporous material. In an embodiment, the first nanoporous component comprises a first pore size distribution and the second nanoporous component comprises a second pore size distribution being different (e.g. larger or smaller pores) than the first pore size distribution. Said pore size distributions may partially overlap or may not overlap. As a specific example (compare Figure 7), the nanoporous component material A comprises a significantly higher amount of small pores than the nanoporous component material B.

In an embodiment, the nanoporous composition comprises 5 weight percent or more, in particular 10 weight percent or more, more in particular 25 weight percent or more, more in particular 50 weight percent or more, more in particular 75 weight percent or more of the first nanoporous component. In an embodiment, the nanoporous composition comprises 5 weight percent or more, in particular 10 weight percent or more, more in particular 25 weight percent or more, more in particular 50 weight percent or more, more in particular 75 weight percent or more of the second nanoporous component. Depending on the desired application, a plurality of different mixtures/combinations of the first nanoporous component and the second nanoporous component (and eventually more nanoporous components) is possible. Preferably, the mixture may be adjusted on purpose to meet a specific hierarchical pore structure.

In an embodiment, the nanoporous composition consists of two or more nanoporous components. This may provide the advantage that the nanoporous composition comprises only/exclusively nanoporous materials, thereby maximizing efficiency.

In an embodiment, the first nanoporous component and/or the second nanoporous component comprises at least one of carbon, zeolite, silicate, boron nitride, metal-organic frameworks. Thus, a plurality of established (and commercially available) nanoporous component may be directly applied (and mixed).

In an embodiment, the first nanoporous component and/or the second nanoporous component comprises an activated material (for example activated carbon). In an embodiment, the first nanoporous component and/or the second nanoporous component comprises a non-activated material. An activation of a nanoporous material may be a known and established process to enhance specific properties such as surface area and/or pore volume and/or to tune the pore size distribution and/or average pore diameter/width towards increased adsorption capacity, catalytic reactivity and/or separation efficiency. The activation may be done for example physically or chemically. Depending on the desired circumstances, a mixture of an activated and a non-activated nanoporous component may be used. For example, activation requires additional costs and efforts, so that using at least one non-activated nanoporous component can be economically advantageous.

In an embodiment, the first nanoporous component and/or the second nanoporous component is present in form of at least one of a powder, a granulate, pellets, spheres, monolithic, cloth, fibers, felts. This may provide the advantage that common (and commercially available) forms of nanoporous components can be directly used. In an example, different forms (e.g. a powder and pellets) may be mixed together.

In an embodiment, the nanoporous composition further comprises a separator structure. In an embodiment, the separator structure comprises at least one of a membrane, a foil, a paper, a cloth, a felt, a matt, a layer. This may provide the advantage that the mixture of the first nanoporous component and the second nanoporous component can be protected and de-mixing can be prevented. For example, the first nanoporous component and the second nanoporous component can be present as mixed powders and the separator structure may protect (a part of) the mixture from de-mixing, e.g. with further parts of the nanoporous composition. In a preferred example, the separator structure may protect a desired packing density.

In an embodiment, a first part of a mixture of the first nanoporous component and the second nanoporous component is separated from a second part of the mixture of the first nanoporous component and the second nanoporous component. In an embodiment, the separator structure separates the first part and the second part layer-wise. In an embodiment, (at least a part of) the nanoporous composition is arranged as a sandwiched structure. These embodiments may provide the advantage of highly dense and stable packaging.

In an exemplary embodiment, by using nanoporous components with different sizes (e.g. grain sizes, particles sizes, pellet sizes, etc.), an optimum packing density can be achieved, leading potentially to an increased fluid/hydrogen uptake per volume unit.

In an embodiment, a de-mixing of these nanoporous components may be avoided by creating a "sandwich-like" structure, where mixtures of powders/granules/pellets are separated by the separator structure, e.g. one of a carbon-based membranes, cloths, papers, foils, etc. This can lead to an increased stability of the material mixture, e.g. in a tank system. Further, it may be avoided that finer components of the mixture can de-mix or are even carried out of the tank system by a hydrogen stream.

In an embodiment, the first nanoporous component and the second nanoporous component are homogeneously or inhomogenously mixed. Depending on the desired application, one of these mixing forms may be preferrable. In an embodiment, the mixture of the first nanoporous component and the second nanoporous component is arranged layer-wise, for example a first part of the mixture on top of a second part of the mixture, in particular with a separator structure in between.

In an embodiment, the fluid (in particular hydrogen) storage capacity of the nanoporous composition is higher, in particular 5% or more, in particular 10% or more, in particular 15% or more, in particular 20% or more, in particular 25% or more, (for at least one specific mixture/ratio of the first nanoporous component and the second nanoporous component), than the calculated weighted theoretical (calculated via the storage capacities of the single materials) fluid storage capacity of the (specific) mixture of the first nanoporous component and the second nanoporous component. This may provide the advantage that the fluid uptake can be significantly higher than expected, thereby making the nanoporous composition more efficient and economic, since less expensive material may be required. As illustrated in the experiment of Figure 6, surprisingly high hydrogen uptake has been determined for specific ratios of the mixture. These unexpected findings may be directly used for adjusting the nanoporous composition.

In an embodiment, the nanoporous composition further comprises an antimicrobial material, in particular at least one of copper, zinc, a noble metal (in particular silver and/or platinum). This may provide the advantage of an improved long-term fluid storage behavior not deteriorated by the presence/growth of microbes.

In an embodiment, antimicrobial behavior is achieved by controlled doping of the nanoporous material (e.g. nanoporous carbons) with metallic particles and/or separation layers. The obtained nanoporous material may comprise e.g. platinum-doped graphene. For example, nanoporous carbon can be doped with ~2 wt.% platinum nanoparticles (< 2 nm). Compare for example: Kostoglou, N., Liao, C. W., Wang, C. Y., Kondo, J. N., Tampaxis, C., Steriotis, T., ... & Mitterer, C. (2021). Effect of Pt nanoparticle decoration on the H2 storage performance of plasma-derived nanoporous graphene. Carbon, 171, 294-305.

In an embodiment, a fluid - such as hydrogen gas - could include humidity resulting in possible microbe formation (funguses, bacteria and parasites) inside a storage system. This could be avoided by adding antimicrobial elements like copper, zinc, or noble metals like silver or platinum in the form of powders, particles and/or dopants to the nanoporous components of the mixture.

In an embodiment, the first nanoporous component and/or the second nanoporous component is a commercially available product. This may provide the advantage that readily available (and potentially commercially important) products (available in large quantities) can be directly applied to provide the nanoporous composition. Thereby, cost and efforts, e.g. for synthesis, may be saved.

In an embodiment, the method further comprises providing/streaming a fluid (under pressure) (in-) to the nanoporous composition, thereby storing the fluid in the pores. Thus, the nanoporous composition may be used as a fluid storage medium and/or form part of a fluid storage device.

In an embodiment, the method further comprises providing a low pressure regime (in particular 1 bar or lower) or a high pressure regime (in particular 10 bar or more). In an embodiment, the applied pressure is below 50 bar. In an embodiment, the applied pressure is in the range 1 to 50 bar. This may provide the advantage that a fluid such as hydrogen may be efficiently provided into the pores of the nanoporous composition. Further, the applied pressure may be significantly lower than in conventional storage tanks (compare Figure 1B), where around 700 bar have to be used.

In an embodiment, the method further comprises providing a low temperature regime, in particular below 200 K, more in particular below 100 K. Such a low temperature may be especially suitable for specific applications such as cryogenic storage of hydrogen gas. The applied pressure may be significantly lower than in conventional storage tanks for gaseous hydrogen (compare Figure 1B), where pressures up to 700 bar have to be used. The applied temperature may be significantly higher than in conventional storage tanks for liquid hydrogen (compare Figure 1B), where temperatures around 20 K have to be used. Typical temperatures of cryogens may be for example 77 K, 87 K, 111 K.

In an exemplary embodiment, by mixing of at least two nanoporous components (carbon(s), zeolite(s), silicate(s) or boron nitride(s)) in the shape of powders/granules/pellets with an amount of > 10 wt.% per component, a mixture with tailor-made hierarchical pore structure properties can be accomplished. This avoids difficult synthesis routes which are typically involved when producing a single material with a hierarchical pore structure. Furthermore, it results in an above-expected hydrogen uptake as the results show.

In an exemplary embodiment, materials with hierarchical porosity (hierarchical pore structure) can be used to increase the useable storage capacity in certain pressure ranges (e.g. low pressures < 1 bar or high pressures < 50 bar). The synthesis of hierarchical materials is typically challenging and expensive. Thus, the combination of different nanoporous structures and particle sizes could lead to more sustainable and efficient material systems for emerging CO₂-emission-free energy storage applications.

In an exemplary embodiment, the fluid (e.g. hydrogen) to be stored is in a supercritical state (at storage condition). For example, while hydrogen at 77 K is supercritical, nitrogen at 77 K is subcritical. A gas is in the subcritical state, when its temperature and pressure are below the critical point, means it can coexist with its liquid phase and can be condensed by increasing pressure or reducing temperature. A gas is in the supercritical state, however, when its temperature and pressure exceed the critical point, results in a single phase that exhibits properties of a gas. Thus, different fluids/gases can behave in different manners at storage temperature (e.g. at 77 K).

### Brief Description of the Drawings

The aspects defined above and further aspects of the invention are apparent from the examples of embodiment to be described hereinafter and are explained with reference to these examples of embodiment.
Figure 1A shows a nanoporous composition, according to an exemplary embodiment of the invention, and Figure 1B schematically shows conventional hydrogen storage devices.
Figure 2 shows the experimentally determined relation of nitrogen adsorption and relative pressure for different nanoporous compositions, according to an exemplary embodiment of the invention.
Figure 3 shows the experimentally determined relation of hydrogen uptake and pressure for different nanoporous compositions, according to an exemplary embodiment of the invention.
Figures 4A and 4B show the experimentally determined relation of pore volume and Pore size distribution (PSD) analysis for different nanoporous compositions, according to an exemplary embodiment of the invention.
Figure 5 shows the specific surface area for nanoporous compositions, according to an exemplary embodiment of the invention, calculated by two different methods.
Figure 6 shows the experimentally determined hydrogen uptake for different nanoporous compositions, according to an exemplary embodiment of the invention, being significantly higher than the calculated weighted value.
Figure 7 shows an overview of commercially available nanoporous components and their properties.
Figures 8A, 8B, and 8C respectively show a fluid storage device, according to an exemplary embodiment of the invention.

### Detailed Description of the Drawings

**Figure 1A****:** according to an exemplary embodiment of the invention, a first nanoporous component with a first pore characteristic, and the macroscopic form of pellets, and a second nanoporous component with a second pore characteristic, and the macroscopic form of spheres, are mixed to provide a nanoporous composition with a specifically tailored hierarchical pore structure. Such a nanoporous composition can be used in a hydrogen storage device and/or as a hydrogen storage medium. In a specific example, the nanoporous composition may store the hydrogen in the temperature range 77 K to 111 K and at a pressure below 50 bar.

In an exemplary embodiment of the invention, a proof of concept has been demonstrated by collecting low pressure (0 to 1 bar) hydrogen ad-/desorption isotherms at cryogenic conditions (77 K) for different material mixture compositions for two nanoporous carbon materials A and B (mixture fractions of 100-0, 75-25, 50-50, 25-75, 0-100) with distinctively different pore structures. The hydrogen uptake of these materials was correlated to their pore structure properties, as derived by gas sorption analysis and their respective costs.

**Figure 2** shows the experimentally determined relation of nitrogen ad-/desorption and relative pressure for different nanoporous compositions, according to an exemplary embodiment of the invention. The Y-axis shows the adsorbed nitrogen volume in cm³/g (at standard temperature and pressure), while the X-axis shows the relative pressure (equilibrium pressure divided by vapour pressure of nitrogen at 77 K). The experiment has been performed at 77 K using liquid nitrogen as a cryogen.

In this experiment (and the following experiments shown in Figures 3 to 7), the commercially available product material A has been used as the first nanoporous component, while the commercially available product material B has been used as the second nanoporous component. Properties of these materials are listed in Figure 7. Besides the pure first nanoporous component and the pure second nanoporous component, three mixtures have been evaluated: 50-50, 25-75, and 75-25 (weight percent).

The result of the experiment is as expected: since the first component comprises smaller pores and a significantly higher surface area, the amount of nitrogen adsorption is much higher than for the second nanoporous component. The more of the first nanoporous component is used, the more nitrogen can be adsorbed (the specific surface area shows a linear correlation with percentage of material A and material B, see Figure 5).

**Figure 3** shows the experimentally determined relation of hydrogen uptake and pressure for different nanoporous compositions at 77 K, according to an exemplary embodiment of the invention. The Y-axis shows the gravimetric hydrogen uptake in weight percent, while the X-axis shows the pressure in mbar. A higher pressure will cause a higher hydrogen uptake. As expected, the second nanoporous component takes up significantly less hydrogen than the first nanoporous component.

However, and most surprisingly, the nanoporous composition (mixture of the first nanoporous component and the second nanoporous component) shows a higher hydrogen uptake than expected; thereby contradicting the linear expectation.

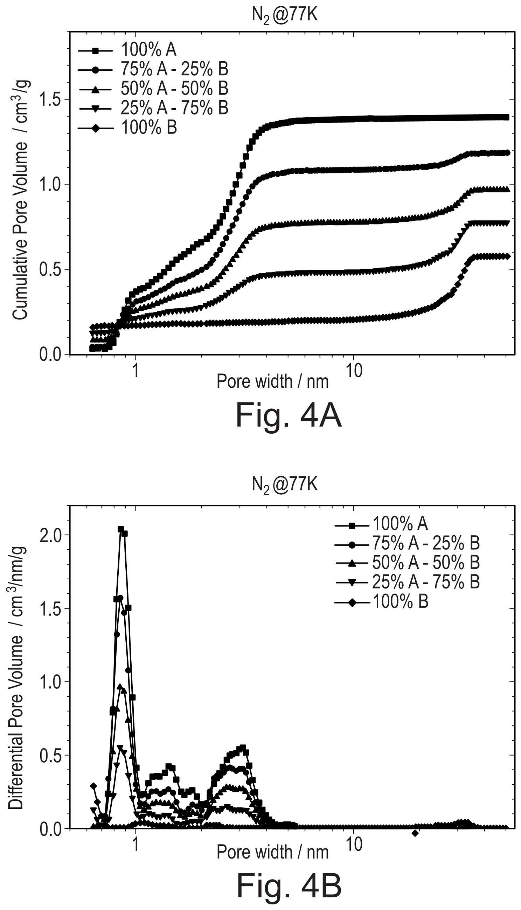

**Figures 4A and 4B** show the experimentally determined relation of cumulative (a) and differential (b) pore volume with pore width for different nanoporous compositions (pore size distribution), according to an exemplary embodiment of the invention. The Y-axis shows the cumulative pore volume in cm³/g (Figure 4A) or differential pore volume in cm³/g/nm (Figure 4B), while the X-axis shows the pore width in nanometers. As expected, the second nanoporous component has a much lower pore volume as the first nanoporous component, clearly visible with increasing amount of material B in the cumulative pore volume. The more of the first nanoporous component material A, is used, the more pore volume is available. Figure 4B shows the increased amount of pores with a size of <1 nm, 1-2 nm and ≈3 nm the more of the first nanoporous component is used. The small peak in the mesoporous regime around 20-30 nm gets more significant with increased amount of the second nanoporous component. In Figure 4B, the peak maxima represent the dominant pore widths for these materials. The higher the peak intensity, the greater the concentration of micropores at these pore widths.

**Figure 5** shows the specific surface area for nanoporous compositions, according to an exemplary embodiment of the invention, calculated by two different methods. The Y-axis shows the specific surface area in m²/g, while the X-axis shows the ratio of the nanoporous components of the nanoporous composition (between the pure first nanoporous component and the pure second nanoporous component). As a first method, BET (Brunauer-Emmett-Teller) has been used, while DFT (Density Functional Theory) has been used as the second method. Both methods are well-known and come to a comparable result: there is a linear expectation; the more weight percent of the first nanoporous component, the larger the surface area (and the hydrogen uptake). Specific surface areas of mixtures consisting of two different carbons (material A and material B) show linear correlation when evaluated by the different methods (BET or DFT). For further reference to BET and DFT, see e.g. Thommes et al. Physisorption of gases, with special reference to the evaluation of surface area and pore size distribution, Pure Appl. Chem. 2015.

**Figure 6** shows the experimentally determined hydrogen uptakes at 1 bar for different nanoporous compositions, according to an exemplary embodiment of the invention. The Y-axis shows the gravimetric hydrogen uptake (in weight percent), while the X-axis shows the composition of the nanoporous composition (between the pure first nanoporous component and the pure second nanoporous component). Since the hydrogen uptake depends on the specific surface area, one would expect a similar (linear) result as shown in Figure 5. The expected linear progression is shown with a dashed line in Figure 6.

However, and most surprisingly, the experimentally determined gravimetric hydrogen uptake (at the mixtures 25-75, 50-50, 75-25) is significantly higher than expected. In the embodiment, where 75 weight percent of the second nanoporous component are used, the hydrogen uptake is 29 percent higher than expected. In the embodiment where 50 weight percent of the second nanoporous component are used, the hydrogen uptake is 13 percent higher than expected, and in the embodiment, where 25 weight percent of the second nanoporous component are used, the hydrogen uptake is 7 percent higher than expected.

This surprising finding means that less material of the more expensive first nanoporous component is required, while still obtaining a comparably efficient hydrogen uptake. Accordingly, a cost-efficient nanoporous composition can be obtained.

**Figure 7** shows an overview of commercially available nanoporous components and some of their pore structure properties. Pore widths ranging from 0.6 to 100 nm can be determined using nitrogen (N₂) adsorption data collected at 77 K. For example, the first nanoporous component A from the above-described examples comprises a significantly higher specific surface area (3024 m²/g) than the second nanoporous component B (559 m²/g). The following abbreviations are used in Figure 7:
- S_{BET}: Total specific surface area according to BET method
- S_{DFT-micro}: Specific surface area of micropores (< 2 nm) according to DFT method
- S_{DFT-tot}: Total surface area of pores (< 50 nm) according to DFT method
- V_{DFT-micro}: Specific pore volume of mircopores (< 2 nm) according to DFT method
- V_{DFT-tot}: Total specific pore volume of pores (<50 nm) according to DFT method
- W_{micro}: Average pore width of micropores (< 2 nm)
- Wₜₒₜ: Average pore width of all pores (< 50 nm)

General ranges for nanoporous materials would be:
Specific surface area 100 - 3500 m²/g
Specific pore volume 0.1 - 2.5 cm³/g
Average pore width 0.3 - 100 nm

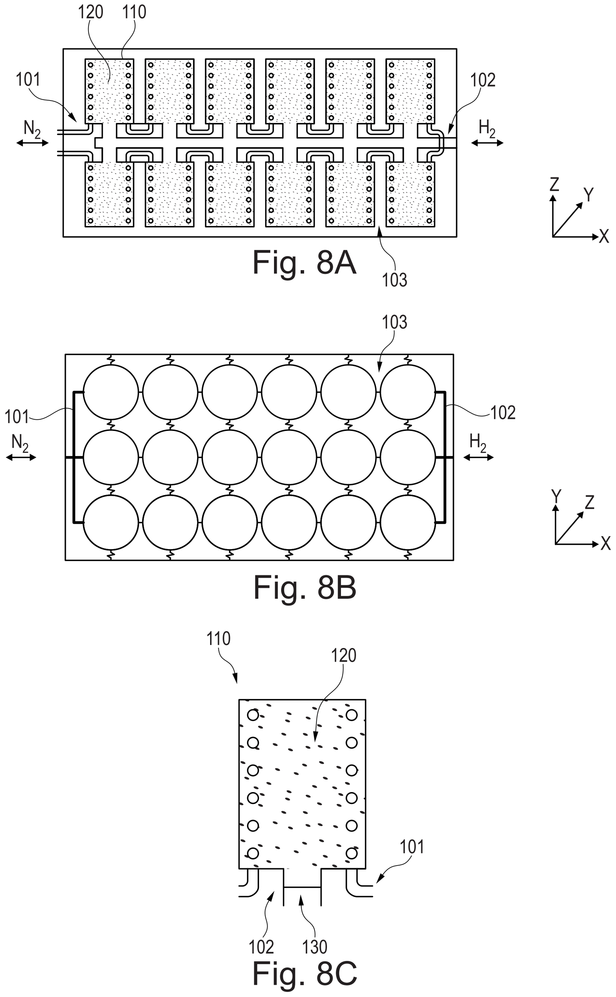

**Figures 8A, 8B, and 8C** respectively show a fluid storage device 100, according to an exemplary embodiment of the invention.

Figure 8A shows a cross-section through such a fluid storage device 100, configured as a container with a plurality of compartments 110, where the above-described nanoporous composition 120 is respectively stored. The compartments 110 arranged in the container are connected via a fluid line (e.g. tubes) system. The empty space 103 outside the compartments 110 can be evacuated (vacuum) to decrease the heat loss, as the compartments 110 are cooled to cryogenic temperatures during operation.

The fluid storage device 100 in this example comprises a cooling/heating system, realized by a nitrogen fluid line system 101. Nitrogen can be provided (inlet and outlet) to the compartments 110, respectively, e.g. to provide a temperature of 77 K.

Additionally, a hydrogen fluid line system 102 is provided to stream the hydrogen to be stored into the nanoporous composition 120 of the respective compartments 110. In this manner, the hydrogen can be stored under cryogenic conditions (here cooled by the nitrogen).

Figure 8B shows a top view on the fluid storage device 100 of Figure 8A, and Figure 8C shows a detailed view of a compartment 1100 with the nanoporous composition 120, the nitrogen supply 101, the hydrogen supply 102, and an (optional) filter 130.

In an exemplary embodiment, such a fluid storage device 100 may provide at least one of the following advantages/features: thermal insulation, liquid nitrogen cooling (e.g. by using a double-integrity tank with additional cooling lines inside the tank), opening for storage and release of hydrogen, temperature and pressure measurement devices, a pressure relieve valve.

## Claims

1. A nanoporous composition, comprising:
a first nanoporous component with a first pore characteristic;
a second nanoporous component with a second pore characteristic;
wherein the first nanoporous component and the second nanoporous component are mixed in the nanoporous composition; and
wherein the first pore characteristic is different from the second pore characteristic, in particular thereby providing a hierarchical pore structure.

2. The nanoporous composition according to claim 1,
wherein the pore characteristic comprises at least one of a pore size, a pore size distribution, a pore volume, a pore volume distribution, an average pore diameter/width, a pore arithmetic mean diameter/width, a pore shape, a pore connectivity.

3. The nanoporous composition according to claim 1 or 2,
comprising 5 weight percent or more, in particular 10 weight percent or more, more in particular 25 weight percent or more, of the first nanoporous component; and/or
comprising 5 weight percent or more, in particular 10 weight percent or more, more in particular 25 weight percent or more, of the second nanoporous component.

4. The nanoporous composition according to one of the preceding claims,
wherein the first nanoporous component and/or the second nanoporous component comprises at least one of carbon, zeolite, silicate, boron nitride, a metal-organic framework; and/or
wherein the first nanoporous component and/or the second nanoporous component comprises an activated material, in particular activated carbon, or a non-activated material.

5. The nanoporous composition according to one of the preceding claims,
wherein the first nanoporous component and/or the second nanoporous component is present in form of at least one of a powder, a granulate, pellets, spheres, monolithic, cloth, fibers, felts.

6. The nanoporous composition according to one of the preceding claims, further comprising:
a separator structure, in particular at least one of a membrane, a foil, a paper, a cloth, a mat, a layer, a felt; and/or
wherein a first part of the mixture of the first nanoporous component and the second nanoporous component is at least partially separated from a second part of the mixture by the separator structure, in particular as a sandwiched structure.

7. The nanoporous composition according to one of the preceding claims,
wherein the first nanoporous component and the second nanoporous component are homogeneously or inhomogenously mixed; and/or
wherein the first part of the mixture of the first nanoporous component and the second nanoporous component and a second part of the mixture are arranged layer-wise.

8. The nanoporous composition according to one of the preceding claims,
wherein the fluid storage capacity of the nanoporous composition is higher, in particular 10% or more, than the theoretical fluid storage capacity of the mixture of the first nanoporous component and the second nanoporous component.

9. The nanoporous composition according to one of the preceding claims, further comprising:
an antimicrobial material, in particular at least one of copper, zinc, a noble metal, in particular silver and/or platinum.

10. The nanoporous composition according to one of the preceding claims,
wherein the first nanoporous component and/or the second nanoporous component is a commercially-available product.

11. A fluid, in particular hydrogen, storage device, comprising a nanoporous composition according to one of the preceding claims.

12. Using a nanoporous composition according to one of the preceding claims 1 to 10 to store a fluid, in particular a gas, more in particular hydrogen.

13. A method of manufacturing a nanoporous composition, the method comprising:
adjusting a mixture of a first nanoporous component and a second nanoporous component to thereby provide specific hierarchical pore structure properties; and
mixing the first nanoporous component with a first pore characteristic and the second nanoporous component with a second pore characteristic, wherein the first pore characteristic is different from the second pore characteristic, thereby providing the hierarchical pore structure properties.

14. The method according to claim 13, further comprising:
providing a fluid to the nanoporous composition, thereby storing the fluid in the pores.

15. The method according to claim 14, further comprising:
providing a low-pressure regime, in particular 1 bar or lower, or a highpressure regime, in particular 10 bar or more; and/or
providing a low-temperature regime, in particular below 200 K, more in particular below 100 K.
